# EUROPEAN PATENT APPLICATION

(11) **EP 4 654 448 A1**
(43) Date of publication of application: **26.11.2025**
(21) Application number: 24747234.3
(22) Date of filing: 22.01.2024
(51) Int. Cl.: H02K 15/095

(54) **WORKPIECE HOLDING DEVICE, WINDING MACHINE, WINDING METHOD, AND METHOD FOR MANUFACTURING WINDING WIRE**

(30) Priority: 24.01.2023 JP 2023008925
(71) Applicant: Odawara Engineering Co., Ltd., Ashigarakami-gun, Kanagawa 258-0003 (JP)
(72) Inventor: MOCHIZUKI Takayuki, Ashigarakami-gun, Kanagawa 258-0003 (JP); MIYAWAKI Noburo, Ashigarakami-gun, Kanagawa 258-0003 (JP)
(74) Representative: Prüfer & Partner mbB Patentanwälte · Rechtsanwälte
(86) International application number: PCT/JP2024/001562
(87) International publication number: WO 2024/157906

(57) **Abstract**

In order to enable positioning of wire ends of the wound wires with a simple configuration, the workpiece holding apparatus includes a plurality of chucks configured to hold a workpiece (8) provided with salient poles (cores) (8a), in a state where wires (W1, W2, W3) fed from nozzles (N1, N2, N3) are wound around the salient poles (8a), by moving in radial direction of the workpiece (8) and coming into contact with the workpiece (8). Among the plurality of chucks (14), each first chuck (14C, 14D, 14E) includes a holding part configured to hold a first portion of the corresponding wire (W1, W2, W3) located between the corresponding salient pole (8a) and the corresponding nozzle (N1, N2, N3), and the wires (W1, W2, W3) are cut in a state where their first portions are held.

## Description

### [Technical Field]

The present invention relates to a workpiece holding apparatus configured to hold a workpiece around which a wire fed from a nozzle is wound, a winding apparatus including the workpiece holding apparatus, a winding processing method of processing a wire fed from a nozzle and wound around a workpiece, and a winding manufacturing method including the winding processing method.

### [Background Art]

A stator and a rotor constituting a motor are installed into a motor housing after necessary winding is completed, through a plurality of processing steps such as terminal attachment and connection to a terminal block and a connector.

Various methods for the winding are known. For example, in the case of winding a wire fed from a nozzle around a stator core (workpiece), after the winding process is completed, the wire between the wound core and the nozzle can be cut by a cutter, and then the stator core can be transferred to the next process. At this time, the wire remaining on the core side after the cutting is referred to as a terminal wire, a lead wire, or a wire end, etc., and it is conceivable to attach the wire to some terminal in the next step. In the present specification, this wire is referred to as a "wire end", but referred to as a "lead wire" when referring to PTL1 described later.

Here, the wire ends may bend or cross each other in a random manner during the cutting process, and thus when there are a plurality of wire ends, the order and positions of the respective wire ends will not be constant. For this reason, there is a problem in that, when the stator core, in which the winding has been completed, is transferred to the subsequent process with the wire ends left in its state after the cutting, it becomes difficult to automatically recognize and accurately pick up the respective wire ends in the subsequent process. If the pick-up cannot be performed accurately, it may cause defects such as an entanglement of the wire end or damage of the wire itself. For this reason, in order to automate the pick-up of the wire ends in the subsequent step, the wire ends are often respectively positioned by manually winding them around some fixing members such as pins, and this process has posed an obstacle to the automation of the entire motor manufacturing process.

On the other hand, PTL1 proposes a technique for automating processing of wire ends (lead wires).

PTL1 discloses, although for a configuration in which coils which have been already formed by winging are inserted into a stator core, a technique in which, after the coils are inserted into the stator core mounted on a pallet, lead wires of the coils are gripped by chucks, drawn out in the outer circumferential direction, and positioned by being clamped between upper and lower annular members having mountain-shaped protrusions, and in this state, the pallet is transferred to the subsequent process by a free-flow conveyor.

Further, as a configuration for transferring a workpiece after completing winding therearound, in addition to the method of using a pallet as disclosed in PTL1, for example, another method is disclosed in PTL2. In this method, a holding member having a chuck function is inserted inside the stator to hold the stator, and the holding member is moved. Note that PTL2 does not mention processing of wire ends of the workpiece.

### [Citation List]

### [Patent Literature]

[PTL1] Japanese Patent Application Laid-Open Publication No. Hei 8 (1996)-988474
[PTL2] Japanese Patent Application Laid-Open Publication No. Hei 8 (1996)-298755

### [Summary of Invention]

### [Technical Problem]

In the lead wire processing apparatus described in PTL1, the chuck mechanism, which is required for each lead wire, includes as many as three air cylinders per unit, and such configuration inevitably increases the size, complexity, and cost of the apparatus. Further, in addition to the chuck mechanism, the upper and lower annular members for holding the respective lead wires individually at the outer peripheral portion are required, which further promotes an increase in size, complexity, and cost of the apparatus.

Such a problem occurs not only in winding around a stator core but also in winding around other workpieces such as a rotor core.

The present invention has been made in view of the above circumstances, and an object of the present invention is to enable the positioning of a wire end after winding by means of a simple configuration.

### [Solution to Problem]

A wire between a workpiece and a nozzle is positioned in an orderly and tensioned state prior to cutting. If the wire is gripped in this pre-cutting state, it becomes unnecessary to provide a configuration for handling randomly bent wire end after the cutting as described in PTL1. Further, if the wire end is positioned using a member for holding and transferring the workpiece, it is not necessary to additionally provide a member for the positioning, and thus simplification of the configuration can be expected. The present invention has been devised based on this idea.

Specifically, in order to achieve the above object, a work holding device according to the present invention includes a plurality of chucks configured to hold a workpiece by moving in a radial direction of the workpiece and contacting the workpiece, the workpiece comprising a first core around which a first wire fed from a first nozzle has been wound, wherein a first chuck among the plurality of chucks comprises a holding part configured to hold a first portion of the first wire between the first core and the first nozzle.

In the above workpiece holding apparatus, it is preferable that the holding part comprises: a recessed portion configured to house the first portion, the recessed portion being located on a first nozzle side of the workpiece when the holding part holds the workpiece; and a movable first pressing member configured to press the first portion housed in the recessed portion against an inner surface of the recessed portion to hold the first portion.

In the above workpiece holding apparatus, it is also preferable that the first chuck comprises an urging member configured to urge the first pressing member so as to contact the inner surface of the recessed portion, and that the workpiece holding apparatus comprises a first driving unit configured to drive the first pressing member in a direction away from the inner surface of the recessed portion.

In the above workpiece holding apparatus, it is also preferable that the recessed portion is configured to house the first portion of the first wire while the first pressing member is held apart from the inner surface of the recessed portion by the first driving unit, thorough relative rotation of the workpiece about an axis of the workpiece with respect to the first nozzle.

In the above workpiece holding apparatus, it is also preferable that the recessed portion is configured to house the first portion of the first wire thorough relative rotation of the workpiece about an axis of the workpiece with respect to the first nozzle.

In the above workpiece holding apparatus, it is also preferable that the apparatus further comprises a second pressing member configured to press the first wire at a position between the first core and the first nozzle so as to move the first wire in the radial direction of the workpiece so that the first portion is aligned with an opening of the recessed portion in the radial direction of the workpiece.

In the above workpiece holding apparatus, it is also preferable that the second pressing member is movable back and forth in the radial direction of the workpiece, and a length, along a circumferential direction of the workpiece, of a distal end portion of the second pressing member configured to contact and press against the first wire is larger than a distance by which a portion of the first wire to be in contact with the distal end portion moves in accordance with the relative rotation.

In the above workpiece holding apparatus, it is also preferable that the second pressing member is configured to hook a portion of the first wire between the first portion and the first nozzle onto a second surface of the distal end portion, which is opposite to a first surface of the distal end portion that contacts the first wire when pressing the first wire, and to pull the first wire outward in the radial direction of the workpiece while the first chuck holds the first portion of the first wire.

In the above workpiece holding apparatus, it is also preferable that the apparatus further comprises a controller configured to control driving of the plurality of chucks in the radial direction of the workpiece so as to bring the plurality of chucks into contact with the workpiece in a state selected from: a first state in which the workpiece is slidable relative to the plurality of chucks and is rotatable about the axis of the workpiece; and a second state in which the plurality of chucks are pressed against the workpiece with a stronger force than in the first state, and that the relative rotation of the workpiece is performed while the plurality of chucks are in contact with the workpiece in the first state.

In the above workpiece holding apparatus, it is also preferable that the workpiece comprises a plurality of cores including the first core, and that the plurality of chucks hold the workpiece in a state where wires including the first wire fed from respective nozzles including the first nozzle have been wound around respective cores of the workpiece corresponding to the nozzles, and that the plurality of chucks include a plurality of first chucks including the first chuck, corresponding to each of the nozzles, and each of the first chucks holds a wire between the corresponding nozzle and the corresponding core.

Further, a winding apparatus according to the present invention comprises: any of the above workpiece holding apparatuses; the first nozzle; a cutter configured to cut a portion between the first portion and the first nozzle of the first wire while the first portion is held by the holding part; and a movable arm comprising the plurality of chucks, wherein the winding apparatus is configured to transfer the workpiece held by the plurality of chucks, by the movable arm, to a device or a stage at which a next process of winding of the first wire will be executed, in a state where the first portion of the first wire is held by the holding part, after the first wire is cut by the cutter.

A winding processing method according to the present invention comprises: a first step of winding a first wire fed from a first nozzle around a first core provided in a workpiece; a second step of holding the workpiece by moving a plurality of chucks in a radial direction of the workpiece and bringing the plurality of chucks into contact with the workpiece, in a state where the first wire has been wound around the first core; a third step of causing a first chuck, among the plurality of chucks holding the workpiece, to hold a first portion of the wire located between the first core and the first nozzle; and a fourth step of cutting a portion of the first wire between the first portion and the first nozzle while the first portion of the first wire is held by the first chuck.

In the above winding processing method, it is preferable that the first chuck comprises: a recessed portion configured to house the first portion, the recessed portion being located on a first nozzle side of the workpiece when the first chuck holds the workpiece; and a movable first pressing member configured to press the first portion housed in the recessed portion against an inner surface of the recessed portion to hold the first portion, and that, in the third step, the recessed portion houses the first portion of the first wire thorough relative rotation of the workpiece about an axis of the workpiece with respect to the first nozzle.

In the above winding processing method, it is also preferable that the first chuck comprises an urging member configured to urge the first pressing member so as to contact the inner surface of the recessed portion, and that, in the third step, the recessed portion houses the first portion of the first wire while the first pressing member is held apart from the inner surface of the recessed portion against an urging force by the urging member, and then the holding of the first pressing member is released so as to press the first portion against the inner surface of the recessed portion and hold the first portion.

In the above winding processing method, it is also preferable that the third step comprises a fifth step of pressing the first wire between the first core and the first nozzle by a second pressing member so as to move the first wire in the radial direction of the workpiece so that the first portion is aligned with an opening of the recessed portion in the radial direction of the workpiece.

In the above winding processing method, it is also preferable that the method further comprises a sixth step of hooking the second holding member onto a portion of the first wire between the first portion and the first nozzle and pulling the first wire outward in the radial direction of the workpiece.

In the above winding processing method, it is also preferable that the second step is a step of holding the workpiece by bringing the plurality of chucks into contact with the workpiece in a first state in which the workpiece is slidable relative to the plurality of chucks and is rotatable about the axis of the workpiece, and that the third step is performed in a state where the plurality of chucks are in contact with the workpiece in the first state, and that the method comprises a step of bringing the plurality of chucks into contact with the workpiece with a force stronger than that in the first state, after the third step.

In the above winding processing method, it is also preferable that the first step is a step of winding wires, including the first wire, fed from respective nozzles including the first nozzle, around respective cores provided in the workpiece, including the first core, each core corresponding to a respective one of the nozzles, and that the plurality of chucks include a plurality of first chucks including the first chuck, each first chuck corresponding to a respective one of the nozzles, and that the third step is a step of causing each first chuck to hold a corresponding wire at its first portion between the corresponding nozzle and the corresponding core, and that the fourth step is a step of cutting a portion of each wire between the first portion and the corresponding nozzle while the first portion is held by the corresponding first chuck.

A winding manufacturing method according to the present invention comprises: each step of any of the above winding processing method; and a seventh step of transferring the workpiece held by the plurality of chucks, by a movable arm comprising the plurality of chucks, to a device or a stage at which a next process of winding of the first wire will be performed, in a state where the first portion of the first wire is held by the first chuck after cutting the first wire in the fourth step.

### [Effect of the Invention]

According to the present invention, positioning of a wire end after winding can be executed by means of a simple configuration.

### [Brief Description of Drawings]

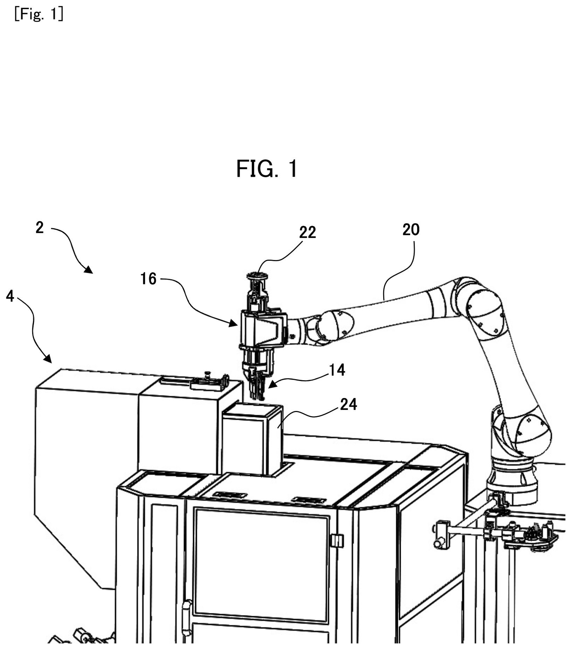

[Fig. 1] Fig. 1 is a perspective view showing a main part of a winding apparatus provided with a workpiece holding apparatus according to an embodiment of the present invention.

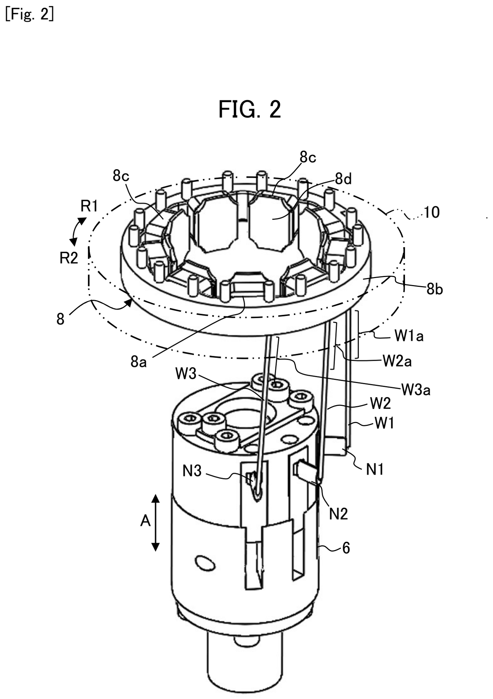

[Fig. 2] Fig. 2 is a perspective view showing a relationship between the workpiece and the nozzle in a state where the winding by the winding device shown in Fig. 1 is completed.

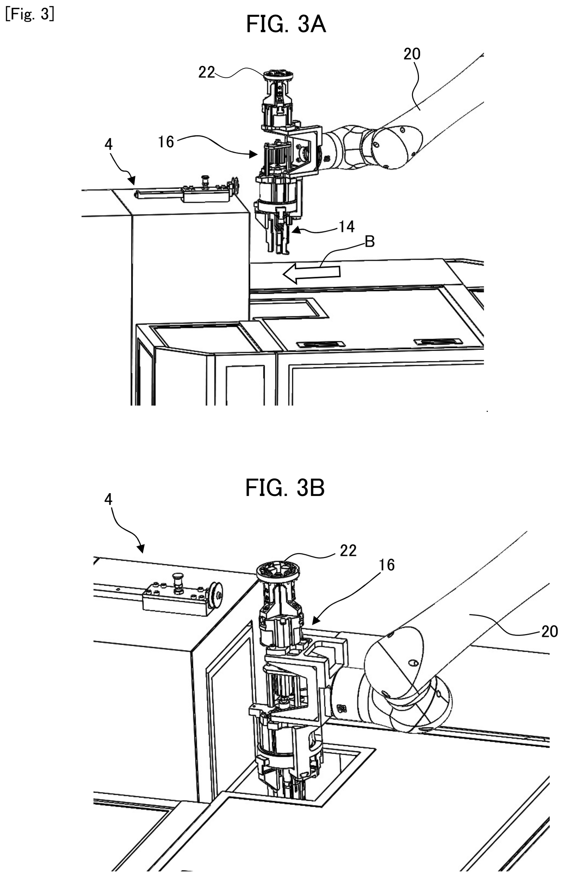

[Fig. 3] Fig. 3A and Fig. 3B are perspective views showing different states during entry of the workpiece holding apparatus into the workpiece holding position in the winding apparatus shown in Fig. 1. Fig. 3A shows a state before the entry, and Fig. 3B shows a state after the entry.

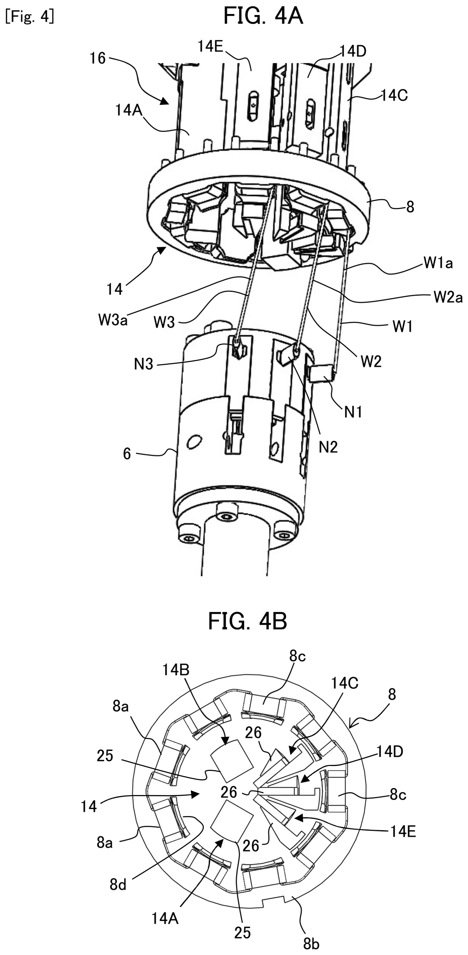

[Fig. 4] Fig. 4A and Fig. 4B are views showing a state after entry of the workpiece holding apparatus into the workpiece holding position in the winding apparatus shown in Fig. 1. Fig. 4A is a perspective view as seen from the lower oblique side of Fig. 1, showing a state before a plurality of chucks start an opening operation, and Fig. 4B is a plan view as seen from the lower side of Fig. 1, showing the workpiece and the chucks.

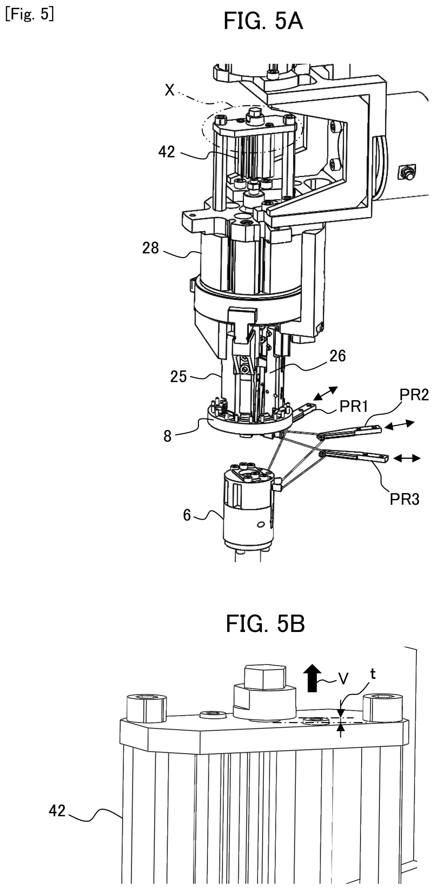

[Fig. 5] Fig. 5A and Fig. 5B are views showing a state in which the workpiece holding apparatus in the winding apparatus shown in Fig. 1 holds the workpiece. Fig. 5A is an enlarged perspective view, and Fig. 5B is an enlarged view of the vicinity of the frame X in Fig. 5A, showing a stroke amount for holding and releasing the wire.

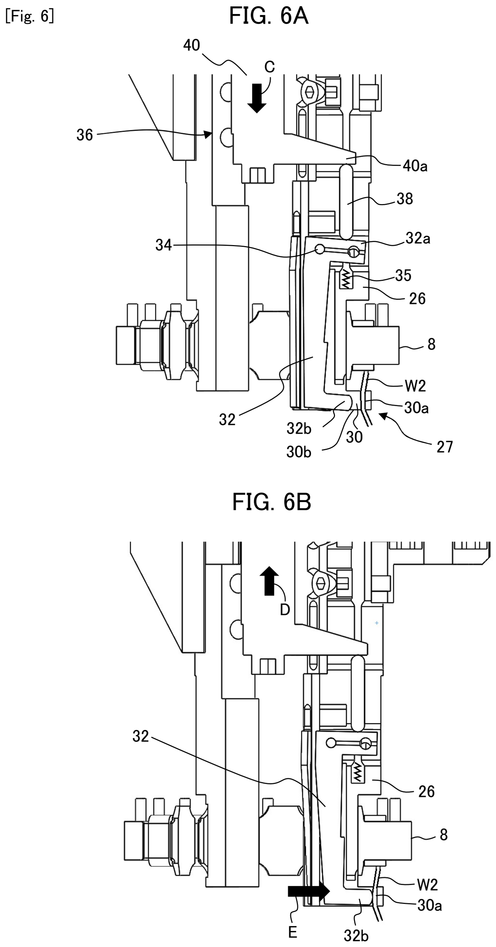

[Fig. 6] Fig. 6A and Fig. 6B are schematic cross-sectional views for explaining an operation of the holding part of the holding chuck in the workpiece holding apparatus shown in Fig. 1. Fig. 6A shows a state prior to holding the wire, and Fig. 6B shows a state in which the wire is held.

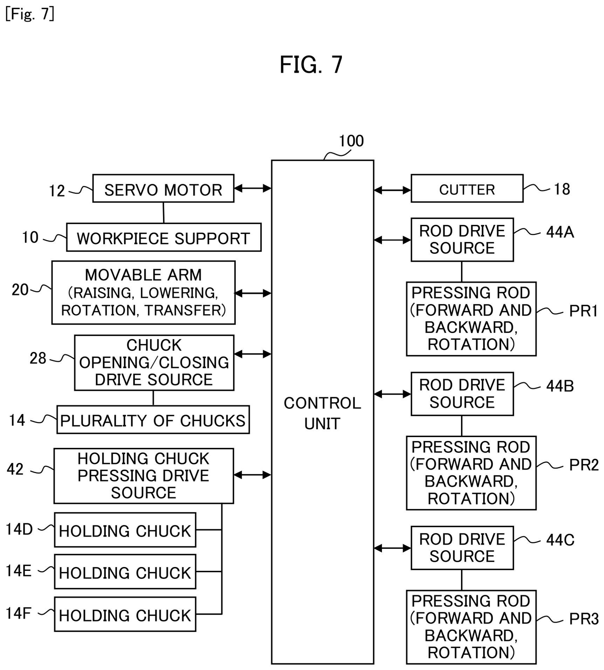

[Fig. 7] Fig. 7 is a block diagram showing a configuration of the winding apparatus shown in Fig. 1.

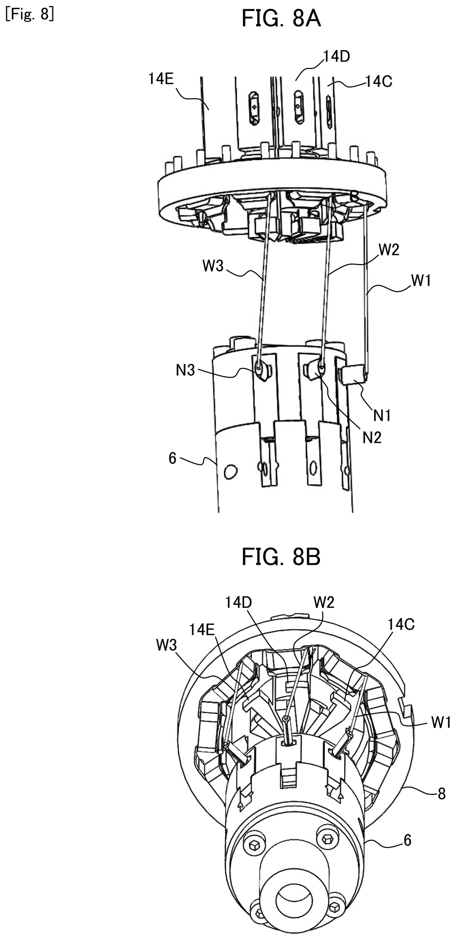

[Fig. 8] Fig. 8A and Fig. 8B are views showing positional relations among the workpiece 8, the chucks 14, the nozzles N1 to N3 and the wires W1 to W3 in a state where the chucks 14 have been inserted into the inside of the workpiece 8 after the winding by the winding apparatus shown in Fig. 1 is completed. Fig. 8A is a perspective view as seen from the side, slightly toward the nozzle unit 6. Fig. 8B is a perspective view as seen from a position closer to the side of the nozzle unit 6.

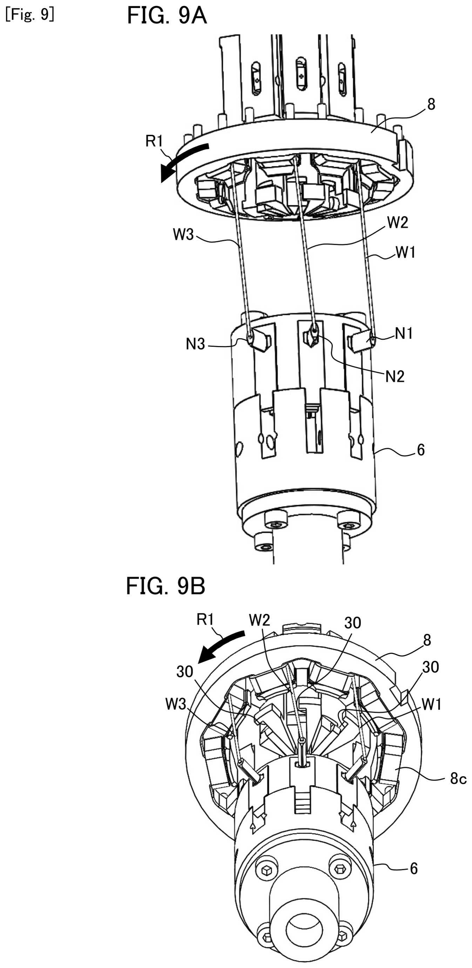

[Fig. 9] Fig. 9A and Fig. 9B are perspective views corresponding to Fig. 8A and Fig. 8B, respectively, showing a state in which the workpiece 8 has been rotated in the direction of arrow R1 from the state shown in Fig. 8A.

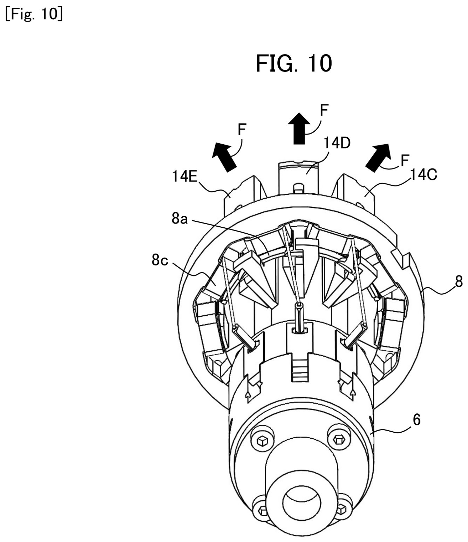

[Fig. 10] Fig. 10 is a perspective view showing a state in which the chucks 14 have switched to a weak holding state from the state shown in Fig. 9A and Fig. 9B, as seen from a position slightly closer to the side of the workpiece 8 and the chucks 14 than in Fig. 9B.

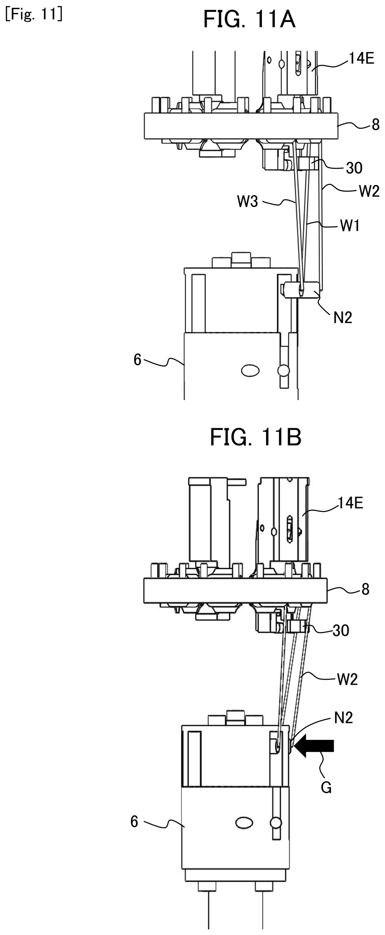

[Fig. 11] Fig. 11A and Fig. 11B are enlarged side views showing the positional relationship between the recessed portion 30 of the holding chuck 14E and the wire W2 in the state shown in Fig. 10. Fig. 11A shows a state in which the nozzle N2 is positioned for a winding operation, and Fig. 11B shows a state in which the nozzle N2 is housed in the nozzle unit 6.

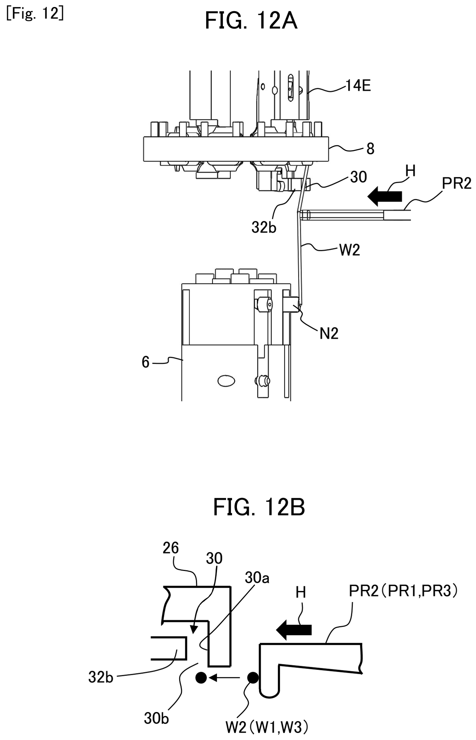

[Fig. 12] Fig. 12A is a side view showing a state in which the nozzle N2 is partially housed in the nozzle unit 6 and the wire W2 is pressed by a pressing rod PR2, from the state shown in Fig. 10. Fig. 12B is a plan view schematically showing the movement of the wire W2 caused by the pressing, together with the arrangement of each component as viewed from above in Fig. 12A along the axial direction of the wire.

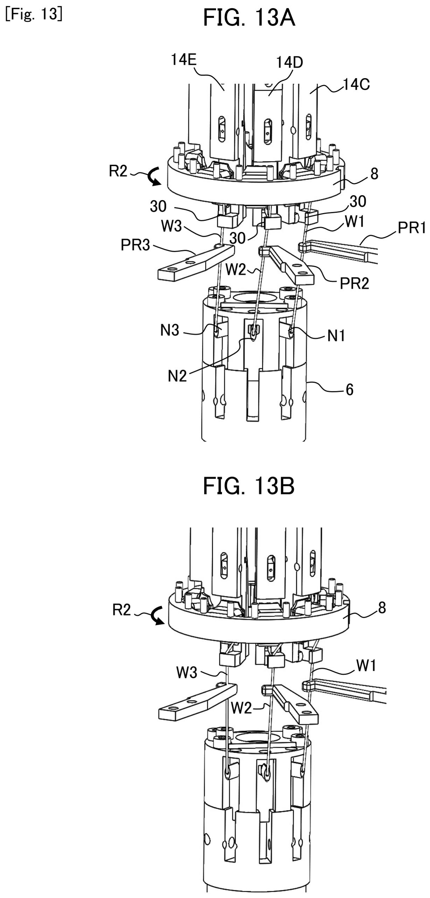

[Fig. 13] Figs. 13A and 13B are perspective views showing states in which the workpiece has been rotated in the direction of arrow R2 from the state shown in Fig. 12A, thereby housing the wires in the recessed portions. Fig. 13A shows a state in which the workpiece has been rotated just enough to house the wires in the recesses, and Fig. 13B shows a state in which the workpiece has been further rotated from the state shown in Fig. 13A to the original position of the index rotation.

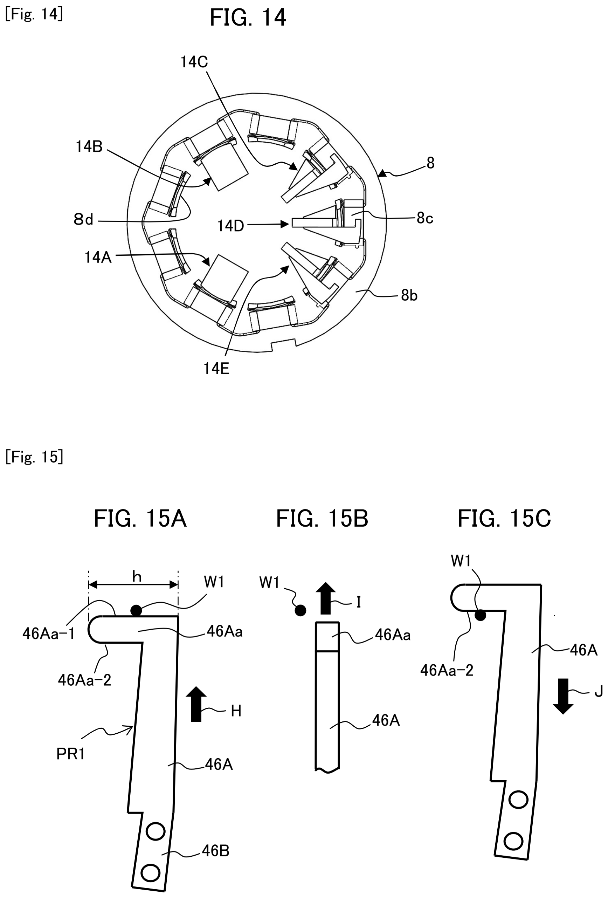

[Fig. 14] Fig. 14 is a view showing the positional relationship between each chuck 14 and portions of the workpiece 8 in the state shown in Fig. 10, as seen in the axial direction of the workpiece 8 from the side of the nozzle unit 6.

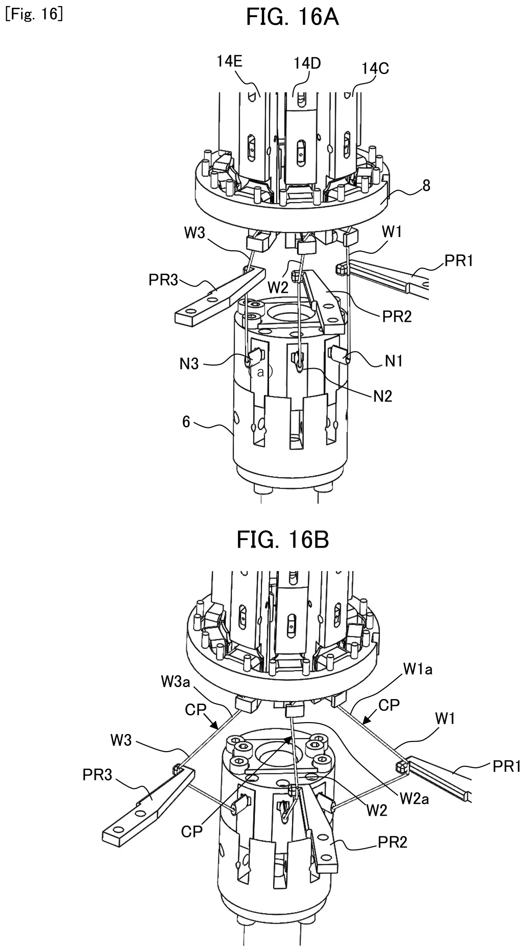

[Fig. 15] Fig. 15A to Fig. 15C are plan views schematically showing the configuration of the pressing rod shown in Fig. 12. Fig. 15A shows the configuration with the positional relationship between the pressing rod and the wire at the time of pressing the wire as shown in Fig. 12A. Fig. 15B shows a positional relationship between the distal end portion 46Aa and the shaft portion 46A of the pressing rod, and the wire, during movement of the pressing rod after being rotated by 90 degrees from the state shown in Fig. 15A, as seen from the same direction as Fig. 15A. Fig. 15C shows a positional relationship between the distal end portion 46Aa and the shaft portion 46A, and the wire when the wire is drawn out as shown in Fig. 16A, also as seen from the same direction as Fig. 15A.
[Fig. 16] Fig. 16A and Fig. 16B are perspective views showing states in which the wire has been drawn out by the pressing rod from the state shown in Fig. 13A. Fig. 16A shows an initial state of the drawing operation, and Fig. 16B shows a state in which the wire has been drawn out to a position where the wire is to be cut by a cutter.

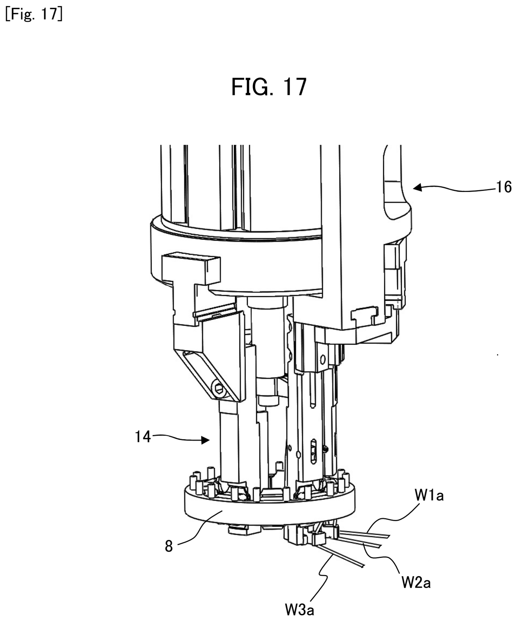

[Fig. 17] Fig. 17 is a perspective view showing a state in which the workpiece 8 is held and transferred by the workpiece holding apparatus 16 after the wire is cut.

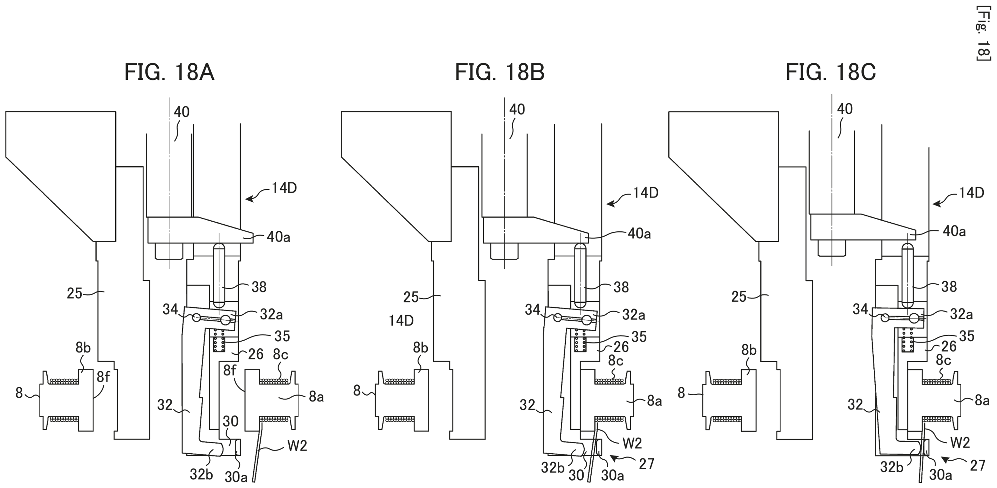

[Fig. 18] Fig. 18A to Fig. 18C are schematic cross-sectional views of a holding chuck 14D and its surrounding structure for explaining an operation in which the holding chuck 14D holds a wire W2 in a modified embodiment. Fig. 18A shows a state corresponding to Fig. 4A and Fig. 4B, Fig. 18B shows a state corresponding to Fig. 10, and Fig. 18C shows a state corresponding to Fig. 13A.

### [Description of Embodiments]

Hereinafter an embodiment of the present invention will be described with reference to the drawings.

Fig. 1 shows a main part of a winding apparatus 2 according to the present embodiment, and Fig. 2 shows a state in which wires W1 to W3 are wound around a workpiece 8 in a winding unit 4 of the winding apparatus 2. As shown in Fig. 2, the winding apparatus 2 drives a nozzle unit 6, which is provided with three nozzles N1 to N3, in the vertical direction (in the direction of arrow A) by a drive source. In synchronization with this, the workpiece 8 is horizontally rotated (indexed) by a predetermined angle at predetermined timings, so that wires W1 to W3 fed respectively from the three nozzles N1 to N3 can be simultaneously wound around three of the salient poles (cores) 8a of the workpiece 8. It is also possible to sequentially wind each of the wires W1 to W3 around multiple salient poles 8a, thereby forming a winding in which the windings corresponding to the multiple salient poles 8a are connected in series.

In the present embodiment, an example of the workpiece 8 is shown as a stator of a three-phase motor, which includes a plurality of salient poles 8a on the inner circumferential side of a laminated core 8b. The wires W1 to W3 wound around the respective salient poles 8a respectively form coils for the U-phase, V-phase, and W-phase (in no particular order). In Fig. 2, reference signs R1 and R2 respectively indicate rotational directions of the workpiece 8 about its axis.

During a process of winding the wires W1 to W3, the workpiece 8 is held by a cylindrical workpiece support 10. The workpiece support 10 is indexed by a servo motor 12 (see Fig. 7), whereby the workpiece 8 is rotated by predetermined angles.

Fig. 2 shows a state in which the wires W1 to W3 fed from the nozzles N1 to N3 are wound around the corresponding salient poles 8a, that is, a state in which the windings 8c on the respective salient poles 8a have been completed. Portions of the wires W1 to W3 located between the salient poles 8a and the nozzles N1 to N3, denoted by reference signs W1a to W3a, are parts that remain on the workpiece 8 side after the wires W1 to W3 are cut by a cutter 18 (see Fig. 7) when the workpiece 8 is removed from the winding unit 4. These parts are referred to as terminal wires, lead wires, or wire ends. In the present embodiment, this first portion is referred to as the "wire end."

One of the characteristic features of this embodiment lies in handling of the wire on the winding end side, which forms the wire end. Accordingly, in order to make the wire ends easier to see, the illustrations of the wires on the winding start side are omitted in the drawings.

As shown in Fig. 1, the winding apparatus 2 includes a workpiece holding apparatus 16 provided with a plurality of chucks 14, and a movable arm 20 having the workpiece holding apparatus 16 rotatably mounted at its distal end. The movable arm 20 is an articulated robot arm.

The winding apparatus 2 further includes the above-mentioned cutter 18. The cutter 18 cuts the wires W1 to W3 after the winding of the wires W1 to W3 around the salient poles 8a has been completed, while portions of the respective wires W1 to W3 are held by holding parts (described later) of respective holding chucks, which are first chucks among the plurality of chucks 14. The cutter 18 cuts the wires W1 to W3 at locations between the respective portions (first portions) held by the holding parts and the nozzles N1 to N3.

After the wires W1 to W3 are cut by the cutter 18, the winding apparatus 2 transfers the workpiece 8, which is held by the plurality of chucks 14, to a device or stage for performing the next process of the winding operation, by means of the movable arm 20, while the wire ends W1a to W3a formed through the cutting remain held by the holding parts of the above-mentioned holding chucks. The next process may include, for example, connecting the wire ends W1a to W3a to predetermined terminals.

The workpiece holding apparatus 16 has a generally cylindrical appearance, and is provided with a plurality of chucks 14 on the lower side in the drawing, while holding an unwound supply workpiece 22 on the upper side.

When the winding onto the workpiece 8 is completed, as shown in Fig. 3A, the winding apparatus 2 retracts a workpiece retainer 24 of the winding unit 4 in the direction of arrow B, thereby opening the upper side of the workpiece 8. In conjunction with the retraction of the workpiece retainer 24, the control unit 100 (see Fig. 7) controls driving of the movable arm 20, so that, as shown in Fig. 3B and Fig. 4A, the movable arm 20 inserts the workpiece holding apparatus 16 into the central portion of the workpiece 8. After the workpiece 8 is held by the plurality of chucks 14 and the wires W1 to W3 are cut by the cutter 18, as will be described later, the movable arm 20 under the control of the control unit 100 lifts the workpiece holding apparatus 16 and rotates it 180 degrees so that the supply workpiece 22 is oriented toward the lower side in Fig. 3A.

In this state, the movable arm 20 causes the workpiece holding apparatus 16 to enter the winding unit 4 again, and places the supply workpiece 22 onto the workpiece support 10. Thereafter, the movable arm 20 lifts the workpiece holding apparatus 16, which holds the workpiece 8, and transfers the wound workpiece 8 to a device or stage at which the next process will be performed. After delivering the wound workpiece 8 to the device or stage, the workpiece holding apparatus 16 receives a new supply workpiece 22 and is returned by the movable arm 20 to the winding standby position shown in Fig. 1. The above describes a series of operations of the winding apparatus 2 from winding of the wires onto the workpiece 8 to transferring of the wound workpiece 8 to the next process. When winding is to be performed on multiple workpieces 8, the winding apparatus 2 repeats the above operations.

Next, the structure and operation related to the holding of the wires W1 to W3 by the above-described holding chuck will be described.

As shown in Fig. 4A and Fig. 4B, the plurality of chucks 14 hold the workpiece 8 by moving to the radially outer side of the workpiece 8 and coming into contact with it, in a state where the wires W1 to W3 fed from the respective nozzles N1 to N3 have been wound around the salient poles 8a corresponding to the respective nozzles N1 to N3. The plurality of chucks 14 hold the workpiece 8 by simultaneously moving radially outward and coming into contact with the salient poles 8a of the workpiece 8. That is, the chucks 14 are motor-driven chucks of a radially expandable holding type. A flange portion 8d is formed at the radially inner end of each salient pole 8a to restrict the position of the end of the winding 8c and to receive contact from the chuck 14. Fig. 4B is a view of the workpiece 8 as seen from the lower side in Fig. 4A.

As shown in Fig. 4B, the plurality of chucks 14 includes two standard-type chucks 14A and 14B that merely come into contact with the workpiece 8, and three holding chucks 14C, 14D, and 14E each having a function of holding the wires W1, W2, and W3, respectively. That is, the plurality of chucks 14 includes multiple holding chucks 14C, 14D, and 14E corresponding to the respective nozzles N1, N2, and N3, and these holding chucks 14C, 14D, and 14E hold the respective wires W1, W2, and W3 that are located between the corresponding nozzles N1, N2, and N3 and the salient poles 8a.

As shown in Fig. 4B and Fig. 5A, the plurality of chucks 14 includes chuck bodies 25, 26 that abut on the workpiece 8 when the workpiece 8 is held, guide members that guide the chuck bodies 25, 26 in the radial direction of the workpiece 8, and a common chuck opening/closing drive source 28 that drives the chuck bodies 25 and 26 to open and close them. The chuck body 25 is a body of the standard-type chuck, and the chuck body 26 is a body of the holding chuck described above. The chuck opening/closing drive source 28 drives the chucks 14, whereby the (in this case, five) chucks 14 simultaneously move in the radial direction of the workpiece 8 to perform opening/closing operation. As the chuck opening/closing drive source 28, for example, a known mechanism including an air cylinder, a motor, a solenoid, or the like can be appropriately employed.

The structure and operation of the holding chucks will be described below, with the holding chuck 14D taken as a representative example. The holding chucks 14C and 14E have the same structure and operation as the holding chuck 14D.

The chuck body 26 of the holding chuck 14D is integrally formed from its base portion driven by the chuck opening/closing drive source 28 to its distal end portion that is to be inserted into the workpiece 8 and to come into contact with the flange portion 8d. As shown in Fig. 6A, the chuck body 26 is provided, at its end in the insertion direction into the workpiece 8, with a holding part 27 configured to hold the wire W2. The holding part 27 is positioned closer to the nozzle N2 than the workpiece 8 while the workpiece 8 is being held, and includes: a hook-shaped recessed portion 30 configured to house the wire W2; and a movable first pressing member 32 configured to press the wire W2 housed in the recessed portion 30 against the inner surface 30a of the recessed portion 30 to hold it.

The first pressing member 32 is rotatably provided, with its upper end supported by the chuck body 26 via a rotation shaft 34, and is provided, at its lower end side in Fig. 6A, with a lower protrusion 32b that protrudes in the radial direction of the workpiece 8. The wire W2 is pressed by the lower protrusion 32b.

The chuck body 26 is provided with a spring 35 and a first driving unit 36. The spring 35 is an urging member configured to urge the first pressing member 32 such that its lower protrusion 32b comes into contact with the inner surface 30a of the recessed portion 30, which extends in the circumferential direction of the workpiece 8. The first driving unit 36 is configured to drive the first pressing member 32 in a direction away from the inner surface 30a of the recessed portion 30, against the urging force of the spring 35.

The first pressing member 32 is further provided, at its upper-end side in Fig. 6A, with an upper protrusion 32a that protrudes in the radial direction of the workpiece 8 and is approximately the same length as the lower protrusion 32b.

The first driving unit 36 includes a slide member 38, a movable member 40, and a holding chuck pressing drive source 42 (see Fig. 5).

The slide member 38 is slidable relative to the chuck body 26 in the vertical direction in Fig. 6A, and is in contact with the upper surface of the upper protrusion 32a of the first pressing member 32. The movable member 40 is vertically movably provided on the chuck body 26, and includes a pressing piece 40a in contact with the upper end of the slide member 38. The holding chuck pressing drive source 42 drives the movable member 40, and is a drive source common to the plurality of holding chucks 14C, 14D, and 14E. As the holding chuck pressing drive source 42, for example, an air cylinder, a motor, a solenoid or the like may be employed.

As shown in Fig. 6A, before the wire W2 is housed in the recessed portion 30 of the chuck body 26, the holding chuck pressing drive source 42 operates to move the movable member 40 downward (in the direction of arrow C), whereby the slide member 38, which is in contact with the upper protrusion 32a, is also pressed downward. As a result, the first pressing member 32 is driven in the clockwise direction, and the lower protrusion 32b is separated from the inner surface 30a of the recessed portion 30.

When the holding chuck pressing drive source 42 operates to move the movable member 40 upward as indicated by arrow D from this state, the first pressing member 32 rotates counterclockwise (in the direction of arrow E) by the urging force of the spring 35, as shown in Fig. 6B. As a result, the lower protrusion 32b presses the wire W2 against the inner surface 30a of the recessed portion 30. Thus, a part of the wire W2 is held in the recessed portion 30. In Fig. 6A, reference numeral 30b denotes the opening (wire housing opening) of the recessed portion 30. Since the wire W2 is pressed by the urging force of the spring 35 when being held, the wire W2 can be stably held with an appropriate force, thereby preventing the wire W2 from being damaged, for example, by excessive pressing force that could scratch its insulating coating.

The drive amount of the holding chuck pressing drive source 42 for holding the wire W2, that is, the upward movement amount t of the movable member 40 indicated by arrow V, is, for example, only a small amount relative to the diameter of the workpiece 8 as shown in Fig. 5B. As shown in Fig. 6A, since the distance from the rotation shaft 34 to the point of action of the slide member 38 on the upper protrusion 32a is shorter than the distance from the rotation shaft 34 to the lower protrusion 32b, the pressing and releasing of the wire end W2a can be achieved with only a small vertical stroke.

As shown in Fig. 5A, between the workpiece 8 and the nozzle unit 6, pressing rods PR1 to PR3, which serve as second pressing members, are provided to be movable back and forth in the radial direction of the workpiece 8, the pressing rods PR1 to PR3 being configured to press the respective wires W1 to W3 at positions between the salient poles 8a and the nozzles N1 to N3, thereby moving the wires W1 to W3 in the radial direction of the workpiece 8 such that the positions, in the radial direction of the workpiece 8, of the wires W1 to W3 align with the openings 30b of the recessed portions 30 of the respective holding chucks 14C to 14E. The pressing rods PR1 to PR3 are provided corresponding to the wires W1 to W3, respectively, and may also be considered as components of the workpiece holding apparatus 16. As shown in Fig. 7, each pressing rod PR1 to PR3 is driven back and forth and rotationally by its corresponding rod drive source 44A to 44C. This will be described in detail later.

Fig. 7 shows a block diagram of the configuration of the winding apparatus 2. A control unit 100 is a microcomputer including: a CPU; and a ROM, a RAM, and an I/O interface section connected to the CPU via a bus line. The control unit 100 detects, as necessary, operations by an operator and signals from various sensors, and with reference thereto, controls the operation of each drive source based on previously stored operation parameters.

Next, a winding processing method using the winding apparatus 2 and a winging manufacturing method including the respective steps of the winding processing method will be described.

The winding processing method according to the present embodiment includes the following first to fourth steps. Each of these steps can be executed by the control unit 100 shown in Fig. 7 by controlling operation of each drive source of the winding apparatus 2.
(a) A first step of winding the wires W1 to W3 fed from the nozzles N1 to N3 of the winding unit 4 around the salient poles 8a provided on the workpiece 8.
(b) A second step of moving the plurality of chucks 14 in the radial direction of the workpiece 8, in which the wires W1 to W3 have been wound around the salient poles 8a, and bringing the respective chucks 14 into contact with the workpiece 8 to hold the workpiece 8 (light holding: first state).
(c) A third step of causing the holding chucks 14C to 14E, among the plurality of chucks 14 holding the workpiece 8, to hold respective portions of the wires W1 to W3 located between the salient poles 8a and the nozzles N1 to N3.
(d) A fourth step of cutting each of the wires W1 to W3 held by the holding chucks 14C to 14E in the third step at a portion between the held position and the corresponding nozzle N1 to N3.

Fig. 8B is a view of the workpiece 8 shown in Fig. 8A as seen from below in Fig. 8A, in a state where the plurality of chucks 14 have been inserted into the workpiece 8 after completion of the winding (first step) of the wires W1 to W3 in the winding unit 4. Components located on the near side of the drawing relative to the nozzle unit 6, such as the drive mechanism of the nozzle unit 6, are omitted from illustration.

Fig. 8A and Fig. 8B show a state in which the workpiece 8 is at its home position for index rotation (i.e., position at the end of the winding). As is apparent from Fig. 8B, in this state, the wires W1 to W3 are positioned circumferentially offset from the respective recessed portions 30 of the holding chucks 14C to 14E. Also, the plurality of chucks 14, including the holding chucks 14C to 14E, have not yet come into contact with the workpiece 8 (specifically, the flange portions 8d of the salient poles 8a).

Since the workpiece 8 can rotate freely in this state, the workpiece 8 is index-rotated about its axis so that the respective recessed portions 30 of the holding chucks 14C to 14E are generally aligned, in the circumferential direction of the workpiece 8, with the wires W1 to W3. The rotation of the workpiece 8 can be performed by the workpiece support 10 and the servo motor 12, which were used to rotationally drive the workpiece 8 during the first step, including those that will be described in later figures.

In the example described here, it is assumed that the rotation direction is the direction of arrow R1 in Fig. 9A and Fig. 9B. As shown in Fig. 9A and Fig. 9B, the rotation is stopped at a position where the wires W1 to W3 have slightly passed beyond the respective recessed portions 30 of the holding chucks 14C to 14E, as viewed in the direction of arrow R1. This places the wires W1 to W3 on the side of the openings 30b of the corresponding recessed portions 30. The specific rotation angle may be determined based on a previously measured average positional relationship between the wires W1 to W3 and the recessed portions 30 at the end of the winding. For example, in the case of a nine-pole workpiece described here, the rotation angle may be set to approximately 20 degrees, which is half of one-ninth of a full rotation.

In the state shown in Fig. 9A and Fig. 9B, the positions of the respective recessed portions 30 of the holding chucks 14C to 14E and the wires W1 to W3 are significantly misaligned in the radial direction of the workpiece 8. From this state, the control unit 100 drives the chuck opening/closing driving source 28 to move the plurality of chucks 14 toward the radially outer side of the workpiece 8, bringing the chucks 14 into contact with the workpiece 8 (specifically, the flange portions 8d of the salient poles 8a). This corresponds to the second step.

Fig. 10 shows a state in which the plurality of chucks 14 have moved in the radially outward direction indicated by arrow F and come into a contact state. Fig. 14 shows the positional relationship between each chuck 14 in this state and each part of the workpiece 8, as viewed from the lower side (the nozzle unit 6 side) in the axial direction of the workpiece 8 in Fig. 10. As seen in the radial direction of the workpiece 8, this position is a position where the wires W1 to W3 are housed in the respective recessed portions 30 of the holding chucks 14C to 14E. If, at the time of this contact, the positions of the respective recessed portions 30 of the holding chucks 14C to 14E and the wires W1 to W3 coincide in the radial direction of the workpiece 8, the wires W1 to W3 can be housed into the respective recessed portions 30 of the holding chucks 14C to 14E by rotating the workpiece 8 in the direction opposite to the arrow R1 (third step).

In the state shown in Fig. 10 (first state), in order to allow the above rotation of the workpiece 8, the plurality of chucks 14 are brought into contact with the workpiece 8 with a relatively weak force so that the workpiece 8 can rotate while sliding against the chucks 14. This contact is not primarily for the purpose of holding the workpiece 8, but rather for positioning the holding chucks 14C to 14E.

Depending on the configuration of the winding apparatus 2, it may be possible to align the respective recessed portions 30 of the holding chucks 14C to 14E with the wires W1 to W3 in the radial direction of the workpiece 8 in the state shown in Fig. 10, either by advancing and retracting the nozzles N1 to N3 in the radial direction relative to the nozzle unit 6 to change their protrusion amounts, or even without changing the protrusion amounts. However, such alignment is not always achievable solely by moving the nozzles N1 to N3.

For example, during the winding of the wire W2, the position of the wound wire W2 can be moved toward the center of the workpiece 8 by retracting the nozzle N2 projecting from the nozzle unit 6 to the extent shown in Fig. 11A, into the nozzle unit 6 to the position shown in Fig. 11B, as indicated by arrow G.

However, as shown in Fig. 11B, even with this movement, it may not be possible to align the position of the wire W2 in the radial direction of the workpiece 8 with the recessed portion 30 of the holding chuck 14E. In such a state, even if the workpiece 8 is rotated in the direction opposite to the arrow R1, the wire W2 cannot be housed within the recessed portion 30. The same applies to the relationships between the other holding chucks 14C and 14E and the wires W1 and W3, respectively.

Accordingly, in the state shown in Fig. 10 (or Fig. 11B), as illustrated by arrow H in Fig. 12A and Fig. 12B, the wire W2 is pressed radially inward toward the center of the workpiece 8 by the pressing rod PR2, so that the wire W2 is pushed to a position aligned with the opening 30b of the recessed portion 30 in the radial direction of the workpiece 8. The radial position of the wire W2 may be adjusted by a combination of pressing by the pressing rod PR2 and the advancing/retracting of the nozzle N2. The other wires W1 and W3 are similarly aligned using the corresponding pressing rods PR1 and PR3. This process corresponds to the fifth step. In Fig. 12A, only the wire W2 and pressing rod PR2 are shown as representatives, and the other wires and pressing rods are omitted.

In this state, by rotating the workpiece 8 in the direction of arrow R2 (which is the opposite direction to the arrow R1), the wires W1 to W3 can be housed inside the respective recessed portions 30 of the holding chucks 14C to 14E, as shown in Fig. 13A.

In any case, in the state where the wires W1 to W3 are housed in this manner, the movable member 40 is moved upward to release the pressing force on the first pressing member 32. As a result, the lower protrusion 32b of the first pressing member 32 presses a part of each of the wires W1 to W3 against the inner surface 30a of the respective recessed portion 30 by the urging force of the spring 35, thereby holding the wires W1 to W3. This completes the third step.

At this time, the workpiece 8 may be returned to the home position of the index rotation as shown in Fig. 13B, beyond the position where the wires W1 to W3 are just housed in the recessed portions 30 of the holding chucks 14C to 14E as shown in Fig. 13A. This is to enable continuous operation of multiple cycles by returning each component to the home position at the end of one cycle. Another advantage is that, by returning the workpiece 8 to the home position, the wires W1 to W3 can be held at the same circumferential positions as those at the end of the winding.

The pressing rods PR1 to PR3, represented by the pressing rod PR1, have an L-shaped configuration, as shown in Fig. 15A, in which a distal end portion 46Aa, configured to come into contact with and press the wire W1, is bent substantially at a right angle with respect to a shaft portion 46A. A connecting portion 46B is provided at the base end of the shaft portion 46A for connection to the rod drive source 44A (see Fig. 7). An arrow H in Fig. 15A corresponds to the pressing direction indicated by the arrows H in Fig. 12A and Fig. 12B.

It is preferable that the circumferential length *h* of the distal end portion 46Aa is longer than the displacement distance of the wire W1 caused by the rotation of the workpiece 8 from the state shown in Fig. 10 to the state shown in Fig. 13A (or Fig. 13B), so that the pressing on the wire W1 can be continuously maintained during the rotation without moving the pressing rod PR1. However, it is also possible to configure the apparatus such that the pressing rod PR1 is moved in the circumferential direction of the workpiece 8 in accordance with the rotation of the workpiece to continue the pressing on the wire W1.

The pressing rods PR2 and PR3 also have configurations similar to that of the pressing rod PR1. The pressing rods PR1 to PR3 can be individually moved forward and backward in the radial direction of the workpiece 8 by the rod drive sources 44A to 44C.

As described above, after the wires W1 to W3 are held in the recessed portions 30, the chuck opening/closing drive source 28 drives the plurality of chucks 14 further outward in the radial direction of the workpiece 8 from the first state of light holding, thereby transitioning the plurality of chucks 14 to a normal holding state (strong holding state: second state) in which the workpiece 8 is firmly held with a stronger force than in the first state.

In this state, as the fourth step, the portions of the wires W1 to W3 between the portions held in the recessed portions 30 (first portions) and the corresponding nozzles N1 to N3 are respectively cut by the cutter 18, whereby the wound workpiece 8 can be brought into a state where it is ready to be transferred to the next process with the respective wire ends W1a to W3a held by the holding chucks 14C to 14E. Since the respective wire ends W1a to W3a held by the holding chucks 14C to 14E have fixed positions at their ends and fixed arrangement order, a device in the next process can easily and automatically grip the respective wire ends W1a to W3a and perform the process such as connecting them to terminals.

It is preferable to cut the wires W1 to W3 at positions as close as possible to the portions held in the recessed portions 30, in order to reduce the length of the free portions of the respective wire ends W1a to W3a. Additionally, it is preferable that the cutter 18 is provided with a clamp, and that the nozzle-side portions of the wires W1 to W3 at the cutting positions are held by the clamp. This facilitates the supply of the wires W1 to W3 to the winding start positions for the next winding on the next workpiece 8.

At the winding start position, it is preferable that the wires are connected to predetermined terminals, inserted into slits, or wound around pins, so that the positions of the ends of the wires can be easily recognized in the next process.

Meanwhile, in the state shown in Fig. 13A or Fig. 13B, components such as the workpiece 8 and the pressing rods PR1 to PR3 may obstruct access to the cutting positions of the wires W1 to W3, which can limit the entry path of the cutter 18. As a result, a complex drive mechanism may be required, or the cutting operation may take longer.

To address this issue, in the present embodiment, after the above-described third step, a sixth step is executed in which the pressing rods PR1 to PR3 are hooked onto the portions of the respective wires W1 to W3 located between the nozzles N1 to N3 and the portions held in the recessed portions 30, and the wires W1 to W3 are pulled outward in the radial direction of the workpiece 8. By this step, the cutting positions of the wires W1 to W3 can be moved to locations less likely to interfere with other components, thereby facilitating access of the cutter 18 to the cutting positions and enabling a faster cutting operation with a relatively simple drive mechanism.

More specifically, taking the pressing rod PR1 as a representative example, while the recessed portion 30 of the holding chuck 14C is holding the wire W1, the portion of the wire W1 located between the held portion and the nozzle N1 is hooked by a second surface 46Aa-2 (a pulling surface) of the distal end portion 46Aa, which is opposite to a first surface 46Aa-1 (a pressing surface) that was in contact with the wire W1 during the pressing described referring to Fig. 12A, and is pulled outward in the radial direction of the workpiece 8.

Once the wire W1 is held in the recessed portion 30, pressing the wire W1 with the pressing rod PR1 is no longer necessary. Therefore, the pressing is released, and then the above-described pulling operation is performed.

For example, in a state where the pressing rod PR1 has been first retracted, as shown in Fig. 15B, the pressing rod PR1 is rotated to an angle (in this case, 90°, where the distal end portion 46Aa faces perpendicular to the page) that allows it to pass without interfering with the wire W1. Then, in this orientation, the pressing rod PR1 is moved radially inward (in the direction of arrow I) so that the distal end portion 46Aa is positioned on the radially inner side of the wire W1. After that, the pressing rod PR1 is returned to its original orientation, and then moved radially outward (in the direction of arrow J), whereby the wire W1 can be pulled radially outward by the second surface 46Aa-2.

The pressing rods PR2 and PR3 perform the same operation, and the advancing/retracting and rotation of the pressing rods PR1 to PR3 are carried out by driving control of the rod drive sources 44A to 44C by the control unit 100. Instead of rotating the pressing rods PR1 to PR3, it is also possible to avoid the wires and move the distal end portions 46Aa radially inward by translating the rods to the right in the figure from the state shown in Fig. 15A.

Fig. 16A illustrates a state in which the second surfaces 46Aa-2 of the distal end portions 46Aa of the respective pressing rods PR1 to PR3 are brought into contact with the wires W1 to W3 and the wires are slightly pulled out. Fig. 16B illustrates a state in which the wires W1 to W3 are pulled out further from that state.

In the state shown in Fig. 16B, it is preferable to cut the wires W1 to W3 at the cutting points CP by moving cutters 18 individually arranged for each of the wires W1, W2, and W3, or by moving a single shared cutter 18. In this state, the cutter 18 can access the wires W1 to W3 along a broad path, providing a high degree of design flexibility.

Once the wires W1 to W3 are cut by the cutter 18, the wire ends W1a, W2a, and W3a are neatly held by the respective holding chucks 14C to 14E, as shown in Fig. 17. In this state, the movable arm 20 is driven to raise the workpiece holding apparatus 16 from the inside of the winding apparatus 2, thereby allowing the workpiece 8, on which the winding 8E has been formed, to be transferred to a device or a stage at which a next process will be performed (seventh step).

By appropriately performing the next process and the processes following it, windings that constitute an electrical rotating machine such as a motor can be manufactured. A method that includes, in addition to the holding of the wire ends and the transfer to the next process described above, all steps up to the completion of the windings constitutes an embodiment of the winding manufacturing method of the present invention. Furthermore, the devices that perform the next process and the processes following it, and the devices that perform processes preceding the processes performed by the winding apparatus 2 can also be included to form a single winding apparatus or a winding processing system.

As described above, in the present embodiment, before cutting the wires W1 to W3 located between the workpiece 8 and the nozzles N1 to N3, namely, while the wires W1 to W3 are neatly positioned and tensioned, the portions that will become the wire ends W1a to W3a are held by the workpiece holding apparatus 16, and then the wires W1 to W3 are cut.

Accordingly, compared to the case where the wire ends W1a to W3a are fixed and positioned after cutting the wires W1 to W3, the positioning of the wire ends W1a to W3a can be more easily achieved. Moreover, since the mechanism for holding the wire ends W1a to W3a is added to the chuck mechanism that is configured to hold and transfer the workpiece 8, it is possible to suppress the complexity of the mechanism for holding the wire ends W1a to W3a as well as an increase in the number of parts.

By rotating the workpiece 8 during the holding operation of the wire ends W1a to W3a using the workpiece support 10 and the servo motor 12, which are used for the winding, it is also possible to suppress the complexity of the mechanism and an increase in the number of parts.

Furthermore, since the mechanism configured to hold the workpiece 8, which is required for transfer to the next process, is also used for holding the wire ends W1a to W3a, the additional time required for the wire end holding operation can be minimized.

As described above, preferred embodiment of the present invention has been explained. However, the present invention is not limited to such specific embodiment, and various modifications and alterations may be made.

For example, in the above-described embodiment, the workpiece 8 has been described as a stator of a three-phase motor, but the workpiece 8 may instead be a rotor.

Fig. 18A to Fig. 18C illustrate, using the portion where the holding chuck 14D holds the wire W2 as a representative example, the operation in which the holding part 27 holds the wire while the holding chuck holds the workpiece 8, in a case where the workpiece 8 is a rotor. These figures schematically show cross-sectional views of the holding chuck 14D and surrounding components, taken along a plane that includes the central axis of the plurality of chucks 14 and passes through the central position of the holding chuck 14D in the circumferential direction of the workpiece 8, in order to clearly illustrate the positional relationship between the holding chuck 14D and the workpiece 8. As for the workpiece 8, only its end face in the cross-section is illustrated. In these figures, components that are common to or correspond with those of the embodiment described above are denoted by the same reference numerals.

In this example, the workpiece 8 has a plurality of salient poles 8a radially provided on the outer peripheral side of a hollow cylindrical laminated core 8b. The wires W1 to W3 wound around the respective salient poles 8a form coils 8c of U-phase, V-phase, and W-phase (in no particular order).

Even when the workpiece 8 is a rotor, the winding of the wires W1 to W3 can be performed in the same manner as in the case of the stator. As shown in Fig. 18A and Fig. 18B, a plurality of chucks 14 can be inserted through the hollow portion of the laminated core 8b, and the chuck bodies 25 and 26 of the respective chucks can be radially moved in the radial direction of the workpiece 8 so as to contact with the inner peripheral surface 8f of the workpiece 8, thereby enabling holding in the same manner as with case of the stator. In Fig. 18B, the chuck body 25 on the left side is not in contact with the inner peripheral surface 8f of the laminated core 8b. However, it is in contact at positions other than the illustrated cross-section.

Fig. 18A corresponds to the state shown in Fig. 4A and Fig. 4B, while Fig. 18B corresponds to the state shown in Fig. 10. That is, a rotational movement of the workpiece 8 may also be included between these states, similarly to the previously described embodiment. Fig. 18C corresponds to the state shown in Fig. 13A, in which the wire W2 has been housed in the recessed portion 30 and then held between the lower protrusion 32b of the first pressing member 32 and the inner surface 30a of the recessed portion 30. In the example shown here as well, the wire W2 can be held by the holding part 27 of the holding chuck 14D in similar steps as in the above-described embodiment, as described in Fig. 18C. Thereafter, as in the above-described embodiment, each wire held by the respective holding parts can be cut, and the workpiece 8 can be transferred to a next process. As with the above-described embodiment, position adjustment of the wires W1 to W3 by pressing them with the pressing rods PR1 to PR3 is not essential.

In addition to the above, although the embodiment described above illustrates a configuration for handling three wire ends W1a, W2a, and W3a, the invention can be similarly applied to the handling of two or fewer, or four or more wire ends.

Furthermore, the configurations of the embodiment and modified examples of the present invention described above may be implemented in part, and the modifications described in the foregoing description may be arbitrarily combined, provided that they are not mutually inconsistent. The effects described in the embodiment of the present invention are merely examples of the most preferable effects achievable by the invention, and the effects of the present invention are not limited to those described in the embodiments.

### [Reference Signs List]

2: winding apparatus, 6: nozzle unit, 8a: salient pole (core), 8: workpiece, 14: chuck, 14C, 14D, and 14E: holding chuck, 16: workpiece holding apparatus, 18: cutter, 20: movable arm, 27: holding part, 30: recessed portion, 30a: inner surface, 32: first pressing member, 35: spring (urging member), 36: first driving unit, 46Aa: distal end portion, 46Aa-1: first surface, 46Aa-2: second surface, N1 to N3: nozzle, PR1 to PR3: pressing rod (second pressing member), W1 to W3: wire, W1a to W3a: wire end

## Claims

1. A workpiece holding apparatus comprising
a plurality of chucks configured to hold a workpiece by moving in a radial direction of the workpiece and contacting the workpiece, the workpiece comprising a first core around which a first wire fed from a first nozzle has been wound,
wherein a first chuck among the plurality of chucks comprise a holding part configured to hold a first portion of the first wire between the first core and the first nozzle.

2. The workpiece holding apparatus according to claim 1,
wherein the holding part comprises: a recessed portion configured to house the first portion, the recessed portion being located on a first nozzle side of the workpiece when the holding part holds the workpiece; and a movable first pressing member configured to press the first portion housed in the recessed portion against an inner surface of the recessed portion to hold the first portion.

3. The workpiece holding apparatus according to claim 2,
wherein the first chuck comprises an urging member configured to urge the first pressing member so as to contact the inner surface of the recessed portion, and
the workpiece holding apparatus comprises a first driving unit configured to drive the first pressing member in a direction away from the inner surface of the recessed portion.

4. The workpiece holding apparatus according to claim 3,
wherein the recessed portion is configured to house the first portion of the first wire while the first pressing member is held apart from the inner surface of the recessed portion by the first driving unit, thorough relative rotation of the workpiece about an axis of the workpiece with respect to the first nozzle.

5. The workpiece holding apparatus according to claim 2,
wherein the recessed portion is configured to house the first portion of the first wire thorough relative rotation of the workpiece about an axis of the workpiece with respect to the first nozzle.

6. The workpiece holding apparatus according to claim 5, comprising
a second pressing member configured to press the first wire at a position between the first core and the first nozzle so as to move the first wire in the radial direction of the workpiece so that the first portion is aligned with an opening of the recessed portion in the radial direction of the workpiece.

7. The workpiece holding apparatus according to claim 6,
wherein the second pressing member is movable back and forth in the radial direction of the workpiece, and a length, along a circumferential direction of the workpiece, of a distal end portion of the second pressing member configured to contact and press against the first wire is larger than a distance by which a portion of the first wire to be in contact with the distal end portion moves in accordance with the relative rotation.

8. The workpiece holding apparatus according to claim 7,
wherein the second pressing member is configured to hook a portion of the first wire between the first portion and the first nozzle onto a second surface of the distal end portion, which is opposite to a first surface of the distal end portion that contacts the first wire when pressing the first wire, and to pull the first wire outward in the radial direction of the workpiece while the first chuck holds the first portion of the first wire.

9. The workpiece holding apparatus according to claim 5, comprising
a controller configured to control driving of the plurality of chucks in the radial direction of the workpiece so as to bring the plurality of chucks into contact with the workpiece in a state selected from: a first state in which the workpiece is slidable relative to the plurality of chucks and is rotatable about the axis of the workpiece; and a second state in which the plurality of chucks are pressed against the workpiece with a stronger force than in the first state,
wherein the relative rotation of the workpiece is performed while the plurality of chucks are in contact with the workpiece in the first state.

10. A workpiece holding apparatus according to any one of claims 1 to 9,
wherein the workpiece comprises a plurality of cores including the first core,
the plurality of chucks hold the workpiece in a state where wires including the first wire fed from respective nozzles including the first nozzle have been wound around respective cores of the workpiece corresponding to the nozzles, and
the plurality of chucks include a plurality of first chucks including the first chuck, corresponding to each of the nozzles, and each of the first chucks holds a wire between the corresponding nozzle and the corresponding core.

11. A winding apparatus comprising:
the workpiece holding apparatus according to any one of claims 1 to 9;
the first nozzle;
a cutter configured to cut a portion between the first portion and the first nozzle of the first wire while the first portion is held by the holding part; and
a movable arm comprising the plurality of chucks,
wherein the winding apparatus is configured to transfer the workpiece held by the plurality of chucks, by the movable arm, to a device or a stage at which a next process of winding of the first wire will be executed, in a state where the first portion of the first wire is held by the holding part, after the first wire is cut by the cutter.

12. A winding processing method comprising:
a first step of winding a first wire fed from a first nozzle around a first core provided in a workpiece;
a second step of holding the workpiece by moving a plurality of chucks in a radial direction of the workpiece and bringing the plurality of chucks into contact with the workpiece, in a state where the first wire has been wound around the first core;
a third step of causing a first chuck, among the plurality of chucks holding the workpiece, to hold a first portion of the wire located between the first core and the first nozzle; and
a fourth step of cutting a portion of the first wire between the first portion and the first nozzle while the first portion of the first wire is held by the first chuck.

13. The winding processing method according to claim 12,
wherein the first chuck comprises: a recessed portion configured to house the first portion, the recessed portion being located on a first nozzle side of the workpiece when the first chuck holds the workpiece; and a movable first pressing member configured to press the first portion housed in the recessed portion against an inner surface of the recessed portion to hold the first portion, and
in the third step, the recessed portion houses the first portion of the first wire thorough relative rotation of the workpiece about an axis of the workpiece with respect to the first nozzle.

14. The winding processing method according to claim 13,
wherein the first chuck comprises an urging member configured to urge the first pressing member so as to contact the inner surface of the recessed portion, and
in the third step, the recessed portion houses the first portion of the first wire while the first pressing member is held apart from the inner surface of the recessed portion against an urging force by the urging member, and then the holding of the first pressing member is released so as to press the first portion against the inner surface of the recessed portion and hold the first portion.

15. The winding processing method according to claim 13,
wherein the third step comprises a fifth step of pressing the first wire between the first core and the first nozzle by a second pressing member so as to move the first wire in the radial direction of the workpiece so that the first portion is aligned with an opening of the recessed portion in the radial direction of the workpiece.

16. The winding processing method according to claim 15, comprising
a sixth step of hooking the second holding member onto a portion of the first wire between the first portion and the first nozzle and pulling the first wire outward in the radial direction of the workpiece.

17. The winding processing method according to claim 13,
wherein the second step is a step of holding the workpiece by bringing the plurality of chucks into contact with the workpiece in a first state in which the workpiece is slidable relative to the plurality of chucks and is rotatable about the axis of the workpiece,
the third step is performed in a state where the plurality of chucks are in contact with the workpiece in the first state, and
the method comprises a step of bringing the plurality of chucks into contact with the workpiece with a force stronger than that in the first state, after the third step.

18. The winding processing method according to any one of claims 12 to 17,
wherein the first step is a step of winding wires, including the first wire, fed from respective nozzles including the first nozzle, around respective cores provided in the workpiece, including the first core, each core corresponding to a respective one of the nozzles,
the plurality of chucks include a plurality of first chucks including the first chuck, each first chuck corresponding to a respective one of the nozzles,
the third step is a step of causing each first chuck to hold a corresponding wire at its first portion between the corresponding nozzle and the corresponding core, and
the fourth step is a step of cutting a portion of each wire between the first portion and the corresponding nozzle while the first portion is held by the corresponding first chuck.

19. A winding manufacturing method, comprising:
each step of the winding processing method according to any one of claims 12 to 17; and
a seventh step of transferring the workpiece held by the plurality of chucks, by a movable arm comprising the plurality of chucks, to a device or a stage at which a next process of winding of the first wire will be performed, in a state where the first portion of the first wire is held by the first chuck after cutting the first wire in the fourth step.
